Europäisches Patentamt

European Patent Office

Office européen des brevets

(11) Veröffentlichungsnummer: **0 305 581 B1**

## EUROPÄISCHE PATENTSCHRIFT

(45) Veröffentlichungstag der Patentschrift: **31.07.91**

(51) Int. Cl.⁵: **F16D 23/04**

(21) Anmeldenummer: **87112963.1**

(22) Anmeldetag: **04.09.87**

(54) **Synchronring.**

(43) Veröffentlichungstag der Anmeldung:
**08.03.89 Patentblatt 89/10**

(45) Bekanntmachung des Hinweises auf die
Patenterteilung:
**31.07.91 Patentblatt 91/31**

(84) Benannte Vertragsstaaten:
**DE ES FR GB IT**

(56) Entgegenhaltungen:
**EP-A- 0 122 562**
**GB-A- 2 006 352**

(73) Patentinhaber: **Borg-Warner Automotive GmbH**
**Kurpfalzring**
**W-6900 Heidelberg 1(DE)**

(72) Erfinder: **Bauer, Walter**
**Finkenweg 25**
**W-6901 Eppelheim(DE)**

(74) Vertreter: **Meyer-Roedern, Giso, Dr. et al**
**Bergheimer Strasse 10-12**
**W-6900 Heidelberg 1(DE)**

Rank Xerox (UK) Business Services

## Beschreibung

Die Erfindung betrifft ein Verfahren zur Herstellung von Synchronringen mit einem Ringkörper und einem darauf aufgebrachten Reibbelag aus papierartigem Material mit Nuten für die Ölfülhrung, wobei die Nuten bis auf den Ringkörper durchgehende Lücken in dem Reibbelagmaterial sind.

Synchronringe mit einem Ringkörper und einem darauf aufgebrachten Reibbelag auf Papierbasis mit Nuten für die Ölführung sind seit längerem bekannt. Auf einem Ringkörper aus Stahl wird der Reibbelag aufgebracht. Letzterer besteht aus einer papierartigen Folie mit unterschiedlicher Zusammensetzung, vorwiegend aus Zellulose und Kunststoff-Fasern, die mit Füllmaterial aufgefüllt sind. Vor dem Aufbringen auf den Ringkörper wird das Reibbelagmaterial mit einem harzartigen Polymer getränkt, das unter hohen Temperaturen ausgehärtet wird.

Für die Herstellung der Nuten für die Ölführung werden zwei Verfahren angewendet. Entweder wird der Reibbelag auf den Ringkörper aufgepresst, und danach die Nuten in den Reibbelag eingefräst, oder es werden während des Aufpressvorgangs die Nuten mittels eines entsprechend geformten Preßstempels in den Reibbelag eingepreßt. Beim erstgenannten Verfahren werden gute Abstreifkanten an den Nuträndern für das Abstreifen des Öls erreicht. Andererseits aber unterliegen die scharfen Kanten leicht einer Beschädigung während des Fräsvorganges und auch im späteren Betrieb. Das zweitgenannte Verfahren hat den Vorteil, daß die Nutränder wesentlich stabiler gegenüber Ausbrechungen sind, jedoch haben sie nicht den gewünschten hohen Abstreifeffekt, da sie an ihren Rändern eine leichte Rundung haben. Beiden Verfahren haftet der Nachteil an, daß die Wärmeleitung vom Öl zum Ringkörper durch den isolierenden Reibbelag nicht voll zur Wirkung kommt.

Die GB-A-20 06 352 beschreibt entsprechend den im Oberbegriff von Anspruch 1 aufgeführten Merkmalen einen Synchronring mit einem Reibbelag auf Papierbasis, bei dem eine einzige Nut für die Ölführung als Lücke in dem nicht über den Umfang geschlossenen Reibbelag ausgebildet ist. Die EP-A-01 22 562 beschreibt einen Synchronring mit einem Reibbelag aus Kunstharz am konischen Innenmantel des Ringkörpers. Die Kunstharzschicht ist durch axiale Nuten unterbrochen, die zur Schmiermittelführung dienen und bis an die Mantelfläche des Ringkörpers reichen können.

Aufgabe der Erfindung ist es, ein einfaches Verfahren zur Herstellung von Synchronringen der eingangs genannten Art zu schaffen, deren Reibbelag scharfkantige Nuten mit großem Querschnitt zur raschen Ölabfuhr besitzen und so den Erfordernissen einer zügigen Synchronisation besonders gut angepaßt sind. Außerdem soll dem Öl die Möglichkeit einer guten Wärmeabfuhr zum Ringkörper gegeben sein.

Diese Aufgabe wird bei einem Verfahren der genannten Art dadurch gelöst, daß die Nuten vor dem Aufbringen des Reibbelags auf den Ringkörper durch eine vollständige Entnahme des Reibbelagmaterials an den Nutstellen als an wenigstens einem Ende geschlossene Nuten aus dem Reibbelag ausgeformt werden, der Reibbelag als zusammenhängendes Teil auf den Ringkörper aufgebracht wird, und dann offene Enden der Nuten durch Entfernen eines die Nuten verschließenden Reibbelagrands gebildet werden.

Aufgrund der Tatsache, daß die Nuten durch eine vollständige Entnahme des Reibbelagmaterials an den Nutstellen hergestellt sind, reichen die Nuten bis auf den Ringkörper. Es zeigt sich, daß bei einer Entnahme des Reibbelagmaterials durch Ausformen vor Aufbringen des Reibbelags auf den Ringkörper eine besonders gute Scharfkantigkeit der Nuten erreicht werden kann. Es werden also sehr scharfkantige Nuten mit maximaler Tiefe gebildet. Die scharfkantigen Nuten ergeben ein schnelles Abstreifen des Öls mit gleichzeitig sehr hohem Anfangsreibwert. Darüber hinaus haben die Nuten in Folge auch ein größeres Nutzvolumen und ermöglichen dadurch eine bessere Wärmeabfuhr bei gleicher Belagstärke. Die durch die vollständige Entnahme des Reibbelagmaterials erreichte große Nuttiefe führt zu einem stärkeren Öldurchfluß, der eine bessere Kühlung zur Folge hat, was schließlich eine längere Lebensdauer des Reibbelags ergibt. Im Umkehrschluß hierzu ist bei gleicher Lebensdauer der Einsatz dünnerer Reibbeläge möglich. Die Isolationswirkung des Reibbelags im Nutbereich fällt weg, und es tritt eine verstärkte Wärmeabfuhr auf.

Dank der Tatsache, daß der Reibbelag als zusammenhängendes Teil auf den Ringkörper aufgebracht wird, und dann offene Enden der Nuten durch Entfernen eines die Nuten verschließenden Reibbelagrands gebildet werden, ist sichergestellt, daß die zwischen den Nuten liegenden Reibbelaganteile genau an den vorgegebenen Stellen angeordnet werden.

Die Entnahme des Reibbelagmaterials kann durch spanloses oder spangebendes Ausformen erfolgen. Vorzugsweise erfolgt die Entnahme des Reibbelagmaterials durch Ausstanzen.

Von besonderer Bedeutung ist, daß die Entnahme des Reibbelagmaterials vor einem Imprägnieren des Reibbelags mit Tränkharz erfolgt, um ein Ummanteln der Schnittfläche mit Tränkharz zu erreichen. Ein Synchronring mit auf diese Weise hergestellten Nutkanten zeigt eine besonders hohe Lebensdauer. Der Reibbelag ist mit der entsprechenden Polymermischung zu imprägnieren und in geeigneter Weise auszuhärten, nachdem der Stanzvorgang durchgeführt wurde.

Die offenen Enden der Nuten werden vorzugsweise durch Entfernen eines über den Ringkörper hinausstehenden Reibbelagrands gebildet.

Die Anordnung der Nuten kann an die jeweils gestellten Bedürfnisse angepaßt werden, um einen besonders gewünschten Reibwertverlauf zu erreichen. Die Nuten können in bekannter Weise mit einem oder beiden Enden offen sein. Mit einem Ende offene Nuten werden durch einseitiges Entfernen eines Reibbelagrands gebildet. Mit beiden Enden offene Nuten können durch einseitiges oder beidseitiges Entfernen von Reibbelagrändern gebildet werden. Bei außen geschlossenen Nuten fließt das Öl langsamer, so daß der äußere Belagbereich nicht so schnell trocken wird. Der Reibwertanstieg ist langsamer. Das Öl wird gestaut und erzeugt einen Öldruck in axialer Richtung, was den Trennvorgang beim Öffnen der Synchronisierung fördert und zu reduzierten Schleppverlusten führt.

Es ist günstiger, wenn die Flächen, von denen das Öl verdrängt wird, möglichst klein sind. Dieses ergibt sich dann, wenn zu den axialen Nuten noch eine Ringnut hinzugefügt wird. Durch die hohe Anzahl an Ölabstreifkanten ergibt sich ein schnelles Verdrängen des Öls zwischen der in Eingriff gehenden Reibfläche des Synchronringes und der Gegenfläche. Dadurch wird der für eine gute Synchronisierung wichtige schnelle Anstieg des Reibwertes erzielt. Dies ist besonders wichtig bei kaltem Öl, und ein "Aufschwimmen" des Synchronrings wird vermieden.

Vorzugsweise werden die Nuten axial zur Synchronringachse ausgerichtet. Dadurch wird eine von der Drehrichtung des Synchronrings unabhängige Wirkungsweise des Rings erreicht. Bei vorgegebener festliegender Drehrichtung des Synchronrings werden schräg verlaufende Nuten eingebracht, um einen optimalen Abstreifeffekt zu erreichen.

Schließlich ist eine Kombination der Nutrichtung möglich. Bei Versuchen hat sich gezeigt, daß axial ausgerichtete Nuten mit einer Umfangsnut besonders gute Ergebnisse liefern.

Insgesamt ergeben sich durch die Erfindung eine Vergrößerung des Synchronisiermoments und abgekürzte Schaltzeiten. Das Verfahren erlaubt die Herstellung beliebiger Nutkonfigurationen, um dadurch die gewünschte Flußrichtung für das Öl zu erreichen.

Vorteilhaft ist, daß an den zwischen den Nuten stehenbleibenden Stegen des Reibbelags am Übergang zu dem Reibbelagrand bzw. den Reibbelagrändern Sollbruchstellen ausgebildet und die Reibbelagränder an den Sollbruchstellen abgetrennt werden.

Anhand zweier Ausführungsbeispiele wird die Erfindung näher erläutert.

Es zeigen

Fig. 1    einen Synchronring im Schnitt mit einem Reibbelag mit axialen Nuten und einer Umfangsnut,

Fig. 2    einen Abschnitt des Reibbelags mit Axial-und Umfangsnut vor dem Aufbringen auf den Synchronring,

Fig. 3    einen Abschnitt eines Reibbelags mit schrägen Nuten vor dem Aufbringen auf einen Synchronring nach dem Ausformvorgang.

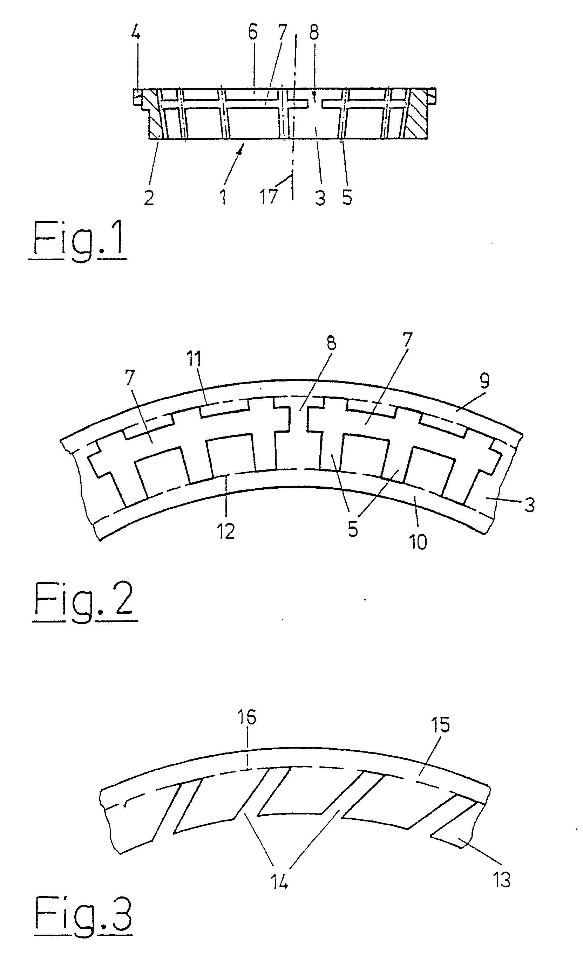

Der in Fig. 1 gezeigte Synchronring 1 besteht im wesentlichen aus dem Ringkörper 2 aus Metall und dem Reibbelag 3. Der Ringkörper 2 ist auf seinem Umfang mit einer Verzahnung 4 versehen. Der Reibbelag 3 ist auf der konisch ausgebildeten Innenfläche 6 des Ringkörpers 2 aufgebracht. Auf den Umfang des Synchronringes 1 verteilt sind in vorbestimmten gleichmäßigen Abständen in axialer Richtung verlaufende Nuten 5 gleicher Größe vorgesehen. Gleichzeitig ist die Umfangsnut 7 vorhanden, die an einzelnen Stellen 8 zur Versteifung des Belags 3 unterbrochen ist.

Die Fig. 2 zeigt einen Abschnitt des ausgestanzten Reibbelags 3 vor dem Aufbringen auf den Ringkörper 2. Die überstehenden Reibbelagsränder 9 und 10 werden nach dem Aufbringen des Reibbelags 3, z. B. durch Verkleben, auf dem Ringkörper 2 weggebrochen.

Hierfür sind die Sollbruchstellen 11 und 12 vorhanden. Nach dem Wegbrechen der Ränder 9 und 10 sind die axialen Nuten 5 nach beiden Richtungen offen, und das Öl kann in beiden Richtungen austreten. Um die Steifigkeit des Reibbelags 3 und damit seine Handhabbarkeit während seiner Imprägnierung zu verbessern und auch um seine Teile zusammenzuhalten trotz Umfangsnut 7, sind mehere Brücken 8 vorgesehen, die der Verbindung der Belagsteile dienen.

In Fig. 3 ist ein Abschnitt eines ausgestanzten Reibbelags 13 mit schräg verlaufenden Nuten 14 gezeigt. Der Belag 13 hat nur einen überstehenden Rand 15, der nach dem Verkleben des Belags 13 mit dem Ringkörper 2 weggebrochen wird. Dies geschieht entlang der Sollbruchstelle 16. Danach ist der fertige Synchronring 1 mit schräg verlaufenden, an beiden Seiten offenen Nuten 14 versehen.

Die gleiche Art von Belagformen kann auch auf Synchronringträger mit außen liegendem Reibbelag angewendet werden.

**Patentansprüche**

1.  Verfahren zur Herstellung von Synchronringen (1) mit einem Ringkörper (2) und einem darauf aufgebrachten Reibbelag (3, 13) aus papierartigem Material mit Nuten (5, 14) für die Ölführung, wobei die Nuten (5, 14) bis auf den Ringkörper (2) durchgehende Lücken in dem Reibbelagmaterial sind, dadurch gekennzeichnet, daß die Nuten (5, 14) vor dem Aufbringen des Reibbelags (3, 13) auf den Ringkörper (2) durch eine vollständige Entnahme des Reibbelagmaterials an den Nutstellen als an wenigstens einem Ende geschlossene Nuten (5, 14) aus dem Reibbelag (3, 13) ausgeformt werden, der Reibbelag (3, 13) als zusammenhängendes Teil auf den Ringkörper (2) aufgebracht wird, und dann offene Enden der Nuten, (5, 14) durch Entfernen eines die Nuten (5, 14) verschließenden Reibbelagrands (9, 10, 15) gebildet werden.

2. Verfahren nach Anspruch 1, dadurch gekennzeichnet, daß die Entnahme des Reibbelagmaterials durch spanloses oder spangebendes Ausformen erfolgt.

3. Verfahren nach Anspruch 1 oder 2, dadurch gekennzeichnet, daß die Entnahme des Reibbelagmaterials durch Ausstanzen erfolgt.

4. Verfahren nach einem der Ansprüche 1 bis 3, dadurch gekennzeichnet, daß die Entnahme des Reibbelagmaterials vor einem Imprägnieren des Reibbelags (3, 13) mit Tränkharz erfolgt.

5. Verfahren nach einem der Ansprüche 1 bis 4, dadurch gekennzeichnet, daß die offenen Enden der Nuten (5, 14) durch Entfernen eines über den Ringkörper (2) hinausstehenden Reibbelagrands (9, 10, 15) gebildet werden.

6. Verfahren nach einem der Ansprüche 1 bis 5, dadurch gekennzeichnet, daß durch einseitiges Entfernen eines Reibbelagrands mit einem Ende offene Nuten gebildet werden.

7. Verfahren nach einem der Ansprüche 1 bis 5, dadurch gekennzeichnet, daß durch einseitiges oder beidseitiges Entfernen von Reibbelagrändern (9, 10, 15) mit beiden Enden offene Nuten (5, 14) gebildet werden.

8. Verfahren nach einem der Ansprüche 1 bis 7, dadurch gekennzeichnet, daß an den zwischen den Nuten (5, 14) stehenbleibenden Stegen des Reibbelags (3, 13) am Übergang zu dem Reibbelagrand bzw. den Reibbelagrändern (9, 10, 15) Sollbruchstellen (11, 12, 16) ausgebildet und die Reibbelagränder (9, 10, 15) an den Sollbruchstellen (11, 12, 16) abgetrennt werden.

## Claims

1. Process for producing synchronising rings (1) with a ring body (2) and with a friction lining (3, 13) applied thereto and consisting of paper-like material and having grooves (5, 14) for oil guidance, the grooves (5, 14) being gaps in the material of the friction lining which are continuous as far as the ring body (2), characterised in that, before the friction lining (3, 13) is applied to the ring body (2), the grooves (5, 14) are shaped out of the friction lining (3, 13), as grooves (5, 14) closed at at least one end, by a complete removal of the material of the friction lining at the locations of the grooves, the friction lining (3, 13) is applied as a coherent part to the ring body (2), and then open ends of the grooves (5, 14) are formed by the removal of a friction-lining rim (9, 10, 15) sealing the grooves (5, 14).

2. Process according to Claim 1, characterised in that the material of the friction lining is removed by non-cutting or cutting shaping.

3. Process according to Claim 1 or 2, characterised in that the material of the friction lining is removed by punching out.

4. Process according to one of Claims 1 to 3, characterised in that the material of the friction lining is removed before the friction lining (3, 13) is impregnated with impregnating resin.

5. Process according to one of Claims 1 to 4, characterised in that the open ends of the grooves (5, 14) are formed by the removal of a friction-lining rim (9, 10, 15) projecting beyond the ring body (2).

6. Process according to one of Claims 1 to 5, characterised in that grooves open at one end are formed by removing a friction-lining rim on one side.

7. Process according to one of Claims 1 to 5, characterised in that grooves (5, 14) open at both ends are formed by removing friction-lining rims (9, 10, 15) on one side or on both sides.

8. Process according to one of Claims 1 to 7, characterised in that predetermined breaking points (11, 12, 16) are formed at the transition to the frictionlining rim or friction-lining rims (9, 10, 15) on the webs of the friction lining (3, 13) which remain between the grooves (5, 14), and the friction-lining rims (9, 10, 15) are detached at the predetermined breaking point (11, 12, 16).

## Revendications

1. Procédé de fabrication d'anneaux de synchronisation (1) comportant un corps annulaire (2) et une garniture de friction (3, 13), rapportée sur lui, en matériau du genre papier, comportant des rainures (5, 14) pour la circulation d'huile, les rainures (5, 14) étant des vides dans le matériau de la garniture de friction, le traversant jusqu'au corps annulaire (2), caractérisé en ce que les rainures (5, 14) sont mises en forme dans la garniture de friction (3, 13), sous la forme de rainures (5, 14) fermées à au moins une extrémité, avant la pose de la garniture de friction (3, 13) sur le corps annulaire (2), en enlevant complètement le matériau de la garniture de friction aux emplacements des rainures, en ce que la garniture de friction (3, 13) est rapportée, sous la forme d'une pièce ininterrompue, sur le corps annulaire (2) et en ce qu'ensuite, des extrémités ouvertes des rainures (5, 14) sont réalisées en enlevant une bordure (9, 10, 15) de la garniture de friction fermant les rainures (5, 14).

2. procédé suivant la revendication 1, caractérisé en ce que l'enlèvement de la matière de la garniture de friction se fait par formage avec ou sans production de copeaux.

3. Procédé suivant la revendication 1 ou 2, caractérisé en ce que 1'enlèvement de la matière de la garniture de friction se fait par matriçage.

4. Procédé suivant l'une des revendications 1 à 3, caractérisé en ce que l'enlèvement de la matière de la garniture de friction a lieu avant imprégnation de la garniture de friction (3, 13) avec de la résine d'imprégnation.

5. Procédé suivant l'une des revendications 1 à 4, caractérisé en ce que les extrémités ouvertes des rainures (5, 14) sont réalisées en enlevant une bordure (9, 10, 15) de la garniture de friction, débordant du corps annulaire (2).

6. Procédé suivant l'une des revendications 1 à 5, caractérisé en ce que les rainures ouvertes à une extrémité sont réalisées en enlevant, d'un seul côté, une bordure de la garniture de friction

7. Procédé suivant l'une des revendications 1 à 5, caractérisé en ce que les rainures (5, 14) ouvertes aux deux extrémités sont réalisées par enlèvement, d'un côté ou des deux côtés, des bordures (9, 10, 15) de la garniture de friction.

8. Procédé suivant l'une des revendications 1 à 7, caractérisé en ce que, sur les nervures de la garniture de friction (3, 13), qui restent entre les rainures (5, 14), on réalise des points de rupture programmée (11, 12, 16) sur la zone de transition menant à la bordure, ou aux bordures (9, 10, 15) de la garniture de friction et en ce que les bordures (9, 10, 15) de la garniture de friction sont détachées sur ces points de rupture programmée (11, 12, 16).

Fig.1

Fig.2

Fig.3